# EUROPEAN PATENT SPECIFICATION

(11) **EP 2 620 758 B1**
(45) Date of publication and mention of the grant of the patent: **10.07.2019**
(21) Application number: 12808054.6
(22) Date of filing: 03.05.2012
(51) Int. Cl.: G01M 99/00, G01M 7/08, A62B 1/08

(54) **SELF-LOCKING RELIABILITY TESTING MACHINE FOR SPEED DIFFERENCE FALLING PREVENTING DEVICE**
SELBSTSPERRENDE ZUVERLÄSSIGKEITSPRÜFUNGSMASCHINE FÜR EINE VORRICHTUNG ZUR VERHINDERUNG DES ABFALLENS EINES GESCHWINDIGKEITSUNTERSCHIEDES
MACHINE D'ESSAI DE FIABILITÉ À AUTOVERROUILLAGE POUR DISPOSITIF DE PRÉVENTION DE CHUTE À DIFFÉRENCE DE VITESSE

(30) Priority: 06.07.2011 CN 201110189045
(43) Date of publication of application: 31.07.2013
(73) Proprietor: Zhejiang Huadian Equipment Testing Institute Co., Ltd., Hangzhou, Zhejiang 310015 (CN)
(72) Inventor: LI, Rui, Hangzhou Zhejiang 310015 (CN); YU, Minbo, Hangzhou Zhejiang 310015 (CN); LI, Zhouxuan, Hangzhou Zhejiang 310015 (CN); LI, Guoyong, Hangzhou Zhejiang 310015 (CN); QIAN, Miao, Hangzhou Zhejiang 310015 (CN); YU, Hongyun, Hangzhou, Zhejiang 310015 (CN); YUAN, Qun, Hangzhou, Zhejiang 310015 (CN)
(74) Representative: 2s-ip Schramm Schneider Bertagnoll Patent- und Rechtsanwälte Part mbB
(86) International application number: PCT/CN2012/075012
(87) International publication number: WO 2013/004105

(56) References cited:
- WO-A1-2007/112733
- CN-A- 1 810 620
- CN-A- 101 216 378
- CN-A- 101 226 111
- CN-A- 102 297 762
- CN-U- 201 653 670
- CN-U- 202 158 948
- CN-Y- 200 995 007
- JP-A- H11 153 532
- SU-A1- 1 717 516
- US-A1- 2004 035 181
- US-A1- 2009 019 917
- US-A1- 2009 211 847

## Description

### TECHNICAL FIELD

The present invention generally relates to a diagnostic device for detecting fatigue performance of a differential safety catch, in particular, the invention relates to a diagnostic device for detecting the self-lock function of a controller of the differential safety catch, under its safety rope being repeatedly pulled out at rapid speed, whether meets the requirements thereof.

### BACKGROUND

The differential safety catch, of which operating principle features in that it implements self-control via speed difference generated during a weight being falling down, is a security tool dedicatedly designed for protecting the operating personnel working at heights falling down. A differential safety catch generally comprises hanger hooks (or rings), a housing, a lock mechanism, and a safety rope(s), allowing for fastening the hanger hook (or ring) disposed at an end of the housing into a structure, as well as detaining the hanger hook (or ring) disposed at an end of the safety rope into a safety fastener of the safety belt, at time of normal use, thereby the safety rope then freely being flexible within the moving range of the personnel without replacing the hanging location thereof, and which speed when pulled out being accelerated once the personnel being falling down that can be controlled to be self-locked by a controller integrated within the differential safety catch within the required falling range of the safety rope, and can recover once the falling being eliminated, and after use, the safety rope automatically drawing back the differential safety catch for being convenient for portable carry.

The differential safety catch is provided for being utilized repeatedly so that the stability of a speed differential self-locking function plays a particularly important role in use. In order to determining whether the self-locking function of the differential safety catch meets the requirement after being multiply and repeatedly used, it is applied conventionally that hanging the differential safety catch to a support frame, and hanging weights to an end of the safety rope and manually holding weights up, then immediately releasing the weights enabling freely fall thereof before measuring the falling distance of the rope whether ranging within lm, finally holding the rope up to draw the rope back the housing. After experiments applying with 1000 times same actions with reference to associated test standards, absolutely, it is confirmed that the aforementioned process presents various defects or disadvantages, such as high intensity of operation, low efficiency, and unscientific procedure. There is a need, therefore, for how to reasonably and stably eliminate the defects and disadvantages, and to provide a diagnostic device for detecting the self-lock performance of a controller of the differential safety catch with high efficiency and low cost.

US 2009/211847 A1 relates to a lifeline system including a lifeline and a hub around which the lifeline is coiled. The hub deforms to absorb energy at a predetermined level of force exerted thereon by the lifeline.

US 2004/0035181 A1 relates to a weight drop system including a frame, a base weight, at least one supplemental weight, a carriage, at least one gripper carried by the carriage and a hold mechanism. The base weight is movable relative to the frame between an undeployed position and a deployed load applying position in which a load is applied. The at least one supplemental weight is actuatable between a load supplementing state in which the load being applied is increased and a non-supplementing state. The carriage moves between a raised position and a lowered retrieving position. The grippers move between a weight engaging position and a weight disengaging position. The hold mechanism holds at least the base weight in the undeployed position while the at least one gripper disengages or is disengaged from at least the base weight. Release of the base weight by the hold mechanism allows at least the base weight to fall to the load applying position.

US 2009/0019917 A1 relates to a test apparatus and method. The test apparatus includes an accelerator assembly and holder assembly that releasably holds a test specimen for acceleration along an acceleration path. Following acceleration along the acceleration path, the test specimen is released from the holder assembly and drops to a landing.

JP 11-153532 A relates to an apparatus and method for impact tests. Wherein a body under test is set to a holding jig to carry out an impact test by a drop. An arrangement of a hook member at a guide groove is adjusted in accordance with a shape and a size of the body under test, and a rotary arm is extended to a fixed arm and brought in a state where the arms are arranged straight in a line. The hook member is screwed to adjust a whole attitude of the body under test.

### SUMMARY

The present invention fulfils the above needs and addresses or alleviates the aforementioned detects in manually detecting or measuring the self-lock performance in prior art, as well as others, by providing a reasonable and safe diagnostic device for detecting the self-lock performance of a controller of the differential safety catch.

According to the invention provided is a diagnostic device for detecting self-lock performance of a differential safety catch of the invention, comprising a base plate, and a frame within which a releaser, a pair of mounting plates, one or two upper stop block(s), an impact base, and a control cabinet being disposed, which is characterized in that:
a hanger ring is fastened with a central hanger plate on top portion of the frame, for connecting with a differential safety catch of which bottom portion being connected to weight module; the pair of the mounting plates are oppositely disposed to separated said frame into upper and lower parts, on each mounting plate an air cylinder, within which an air lever being disposed, is individually formed, a connected portable plate being provided with a position sensor, is fastened with a lower portion of each air lever and by the air lever for vertical motion thereof; beneath each mounting plate two gag lever ports of portable plate and one gag lever port of weight module are individually disposed, wherein each gag lever port of portable plate is connected with the portable plate for preventing the skewing thereof during said vertical motion;
an air pump for holding the two plates up;
two releasers being oppositely disposed are disposed respectively on the portable plate, each of which includes a electromagnet, release claw and a leverage, and is configured to connect the electromagnet with one side of the leverage to form a detachable mechanical linkage and the release claw with another side of the leverage, enabling the release claw vertically vibrating within a certain range while detached from the leverage, and the detachable mechanical linkage formed by the electromagnet and the leverage holding the weight module to prevent the fall thereof, respectively, wherein the release jaw horizontally extends toward the internal central axis of the frame to form a movable planet used for supporting weight module;
the impact base is disposed in central portion of the base plate, of which centre axis is coincided with the weight module, as well as the differential safety catch thereof, a count sensor is further disposed on said impact base.

A preferred embodiment of the diagnostic device for detecting self-lock performance of a differential safety catch of the invention features as following in that:
1) The releaser controls the release claw by applying for operating principle of the electromagnet to stably achieve releasing or holding the weight block;
2) Alleviating the operating intensity and advancing the detecting efficiency via automatically controlling the detecting process by applying for a control cabinet;
3) Descending the manufacturing cost, as well as enhancing the consistency of production with simplified configuration, thereby being available of volume produce.

In a preferred embodiment of the present invention, within the frame, one or two lower stop block(s) 12 are disposed above the base plate.

In another preferred embodiment of the present invention, the weight module include a hanging rod, securing screw nut, a weight block and a plurality of weights, the weight block and the weights are configured in circular respectively, two thru holes configured to be connectedly inserted with the gag lever port of weight module are formed in the peripheral portion of the weight block; a open slot is formed in the weight block for being inserted with the plurality of the weights as needed which being secured by screwing the securing screw nut up.

In yet another preferred embodiment of the present invention, the releaser further includes a mounting plate, a bearing, and a sleeve, the mounting plate is fastened with the bearing, the bearing is fastened with the portable plate, the leverage includes a lever, latch, and a skipjack, the lever is connectedly shafted with the mounting plate, as well as the bearing through a shaft pin which being fastened with the mounting plate, as well as the bearing through a bolt; a arc groove of which circle centre being with the shaft pin is formed in the bearing, the latch is configured to connect an end of the lever with its one end and connect an end of the skipjack of which another end being connected with the shaft pin, with another end passing through the arc groove; the release claw is secured with the inner port of the lever; the sleeve within which the electromagnet being secured is fastened with mounting plate.

In still another preferred embodiment of the present invention, the impact base includes a base, a carrier plate, a bolt, and buffer springs, the carrier plate is embedded into the base for efficiently descending the impact force from the weights, alleviating affect to the surrounding, and prolonging the service time of the diagnostic device, as well as other benefit, by the buffering generated as said weights falling down to impact the carrier plate, the bolt is connected with the carrier plate after passing through the base. The buffer springs are sleeved around the bolt and entrapped between the base and the carrier plate, the count sensor is disposed in one lateral portion of the base.

The above described features and advantages, as well as others, will become more readily apparent to those skilled in the art by reference to the following detailed description and its accompanying drawings. While it would be desirable to provide an automatic releaser that provides one or more of the above mentioned advantageous features, or other advantages as may be apparent to those reviewing this disclosure, the teachings disclosed herein extend to those embodiments which fall within the scope of the appended claims, regardless of whether they accomplish one or more of the aforementioned features or advantages.

### BRIEF DESCRIPTION OF THE ACCOMPANYING DRAWINGS

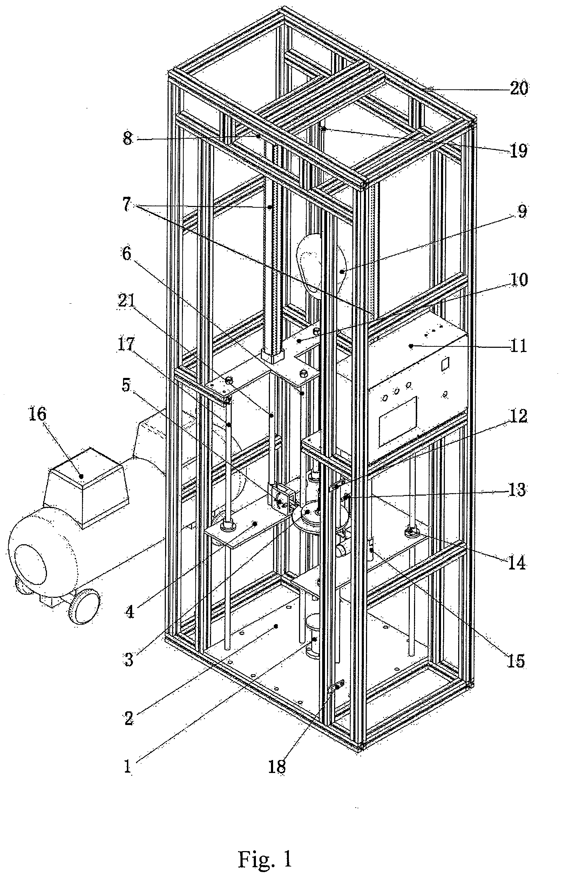

Fig. 1 shows a structural schematic diagram of the diagnostic device for detecting the self-lock performance of the differential safety catch of the present invention;
Fig. 2 shows a structural schematic diagram of the weight module of the present invention;
Fig. 3 shows a structural schematic diagram of the releaser of the present invention;
Fig. 4 shows a structural schematic diagram of a front view of the releaser of the present invention;
Fig. 5 shows a structural schematic diagram of a plan view of the releaser of the present invention from Fig. 4;
Fig. 6 shows a structural schematic diagram of an enlarged section view from A-A dash line direction of Fig. 5;
Fig. 7 shows a structural schematic diagram of a front view of the diagnostic device for detecting the self-lock performance of the differential safety catch of the present invention;
Fig. 8 shows a structural schematic diagram of the impact base of the present invention;
Fig. 9 shows a schematic diagram of the portable plate when ascending up to the upper limit position;
Fig. 10 shows a schematic diagram of the weight module when falling down as the releaser released it.

### DETAILED DESCRIPTION OF THE PREFERRED EMBODIMENT

With reference now to the drawing, a preferred embodiment of the diagnostic device for detecting the self-lock performance of the differential safety catch of the present invention comprises an air pump 16, an air cylinder 7, a frame 20, a portable plate 4, a releaser 5, a sensor 13 closer to the switch, and an impact base 1, as well as a control cabinet 11.

A hanger ring 19 is fastened with a central hanger plate 8 on top portion of the frame 20, for connecting with a differential safety catch 9.

The pair of the mounting plate 10 are oppositely disposed to separated said frame 20 into upper and lower parts.

On each mounting plate 10 a bi-directional air cylinder 7, within which an air lever 21 being disposed, is vertically formed. A connected portable plate 4, being arranged with a position sensor 13, is fastened with lower portion of each air lever 21 and driven by the air lever 21 actuated for a vertical motion thereof.

Beneath each mounting plate 10 two gag lever ports 17 of portable plate 4 and one gag lever port 6 of weight module 3 are individually disposed, wherein the gag lever port 17 of portable plate 4 is connected with the portable plate 4 for preventing the skewing thereof during said vertical motion.

Within the frame 20, one or two upper stop block(s) 12 being disposed below the mounting plates 10 is configured to control the upper limit location for the vertically upward motion of the portable plate 4. Within the frame 20, one or two lower stop block(s) 12 being disposed above the base plate 2 is/are configured to control the lower limit location for the vertically downward motion of the portable plate 4.

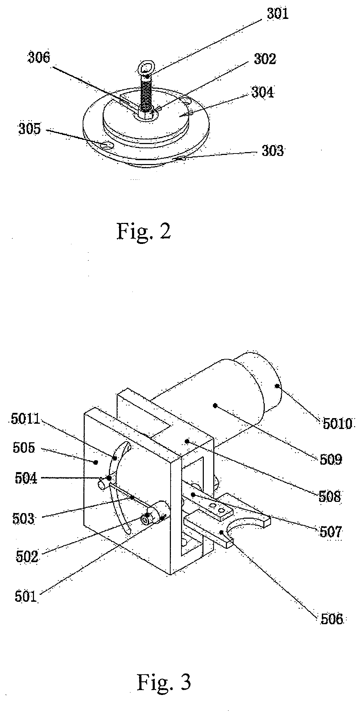

With reference now to Fig. 2, the weight module 3 include a hanging rod 301, a securing screw nut 302, a 5kg weight block 303 and a plurality of 1kg weights 304, the 5kg weight block 303 and the 1kg weights 304 are configured in circular respectively. Two thru holes 305 configured to be connectedly inserted with the gag lever port 6 of weight module 3 are formed in the peripheral portion of the 5kg weight block 303; a open slot 306 is formed in the 1kg weight block 304 for being inserted with the plurality of the 1kg weights 304 as needed which being secured by screwing the securing screw nut 302 up for protecting the weight module 3 from skewing or abjunction.

A pair of gag lever ports 6 of weight module 3 disposed in parallel with the gag lever ports 17 of portable plate 4 and beneath the mounting plate 10 passing through the thru hole 305 of the weight module 3 are configured to prevent the skewing thereof in peripheral orientation during said vertical motion.

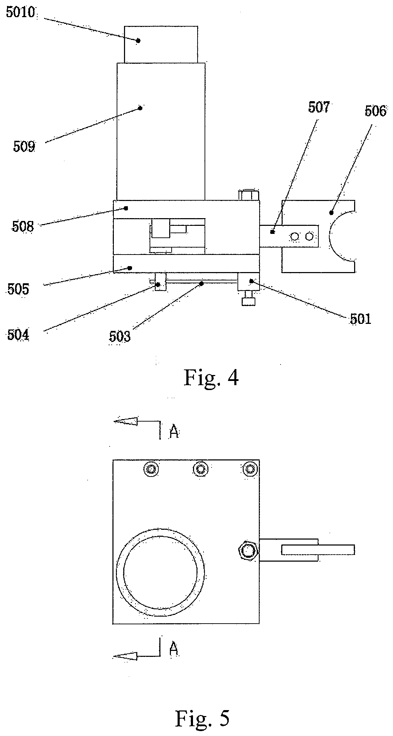

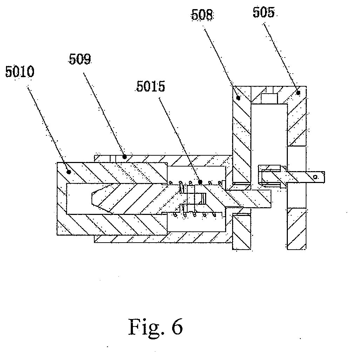

Two releasers 5 being oppositely disposed are disposed respectively on the portable plate 4, with reference to Fig. 5 and 6, each of which includes an electromagnet 5010, a release claw 506 and a leverage, and is configured to connect the electromagnet 5010 with one side thereof, to form a detachable mechanical linkage, and the release claw 506 with another side thereof that enables the release claw 506 vertically vibrating within a certain range while detached from the leverage, and the detachable mechanical linkage formed by the electromagnet 5010 and the leverage holding the weight module 3, to prevent the fall thereof, respectively, wherein the release claw 506 horizontally extends toward the internal central axis of the frame to form a movable planet used for supporting weight module 3.

The mounting plate 8 is fastened with the bearing 505, the bearing 505 is fastened with the portable plate 4. The leverage includes a lever 507, latch 504, and a skipjack 503, the lever 507 in connectedly shafted with the mounting plate 8, as well as the bearing 505 through a shaft pin 501 which being fastened with the mounting plate 8, as well as the bearing 505 through a bolt 502; an arc groove 5011 of which circle centre being with the shaft pin 501 is formed in the bearing 501, the latch 504 is configured to connect an end of the lever 507 with its one end and connect an end of the skipjack 503 of which another end being connected with the shaft pin 501, with another end passing through the arc groove 5011.

The electromagnet 5010 secured within the sleeve 509 is configured to release or link the leverage in correspondence with the instruction from the cabinet 11. Specifically, the electromagnet 5010 is energized as the cabinet 11 transformed release instruction to cause the iron core actuated, allowing for releasing the lever 507 to release the weight module 3 by release claw 506 being switched downwards under the gravity action of the weight module 3. On the contrary, the electromagnet 5010 is de-energized as the cabinet 11 transformed link instruction to cause the iron core ejected by the action of a reset spring 5015, allowing for pressing the lever 507 to holding the weight module 3 up without release claw 506 being switched downwards, thereby forming a linkage therebetween.

A position sensor 13 is disposed on the portable plate 4, such as closer to the switch. The portable plate 4 is actuated for a downward motion the air lever 21 as long as the weight module 3 falls down. The portable plate 4 alters to be actuated for a upward motion as long as the sensor 13 received the signature representative of the weight module 3 during said downward motion, then the release claw of the releaser 5 instantaneously holds the weight module 3 up and moves up to the upper limit location along with the motion of the portable plate 4.

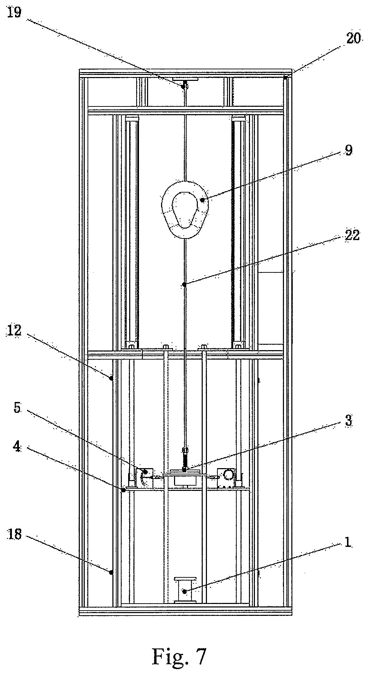

The impact base 1 is disposed in central portion of the base plate 2, of which centre axis, with reference to Fig. 7, is coincided with the weight module 3, as well as the differential safety catch 9 thereof.

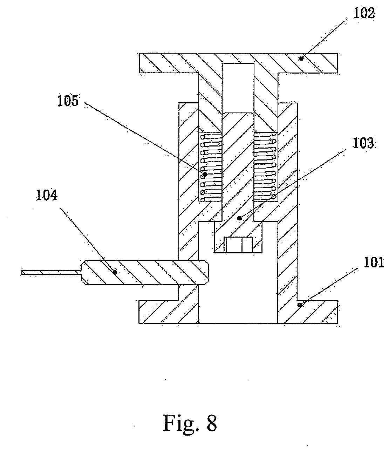

With reference now to Fig. 8, the impact base 1 includes a base 101, a carrier plate 102, a bolt 103, and buffer springs 105, wherein the carrier plate 102 is embedded into the base 101, the bolt 103 is connected with the carrier plate 102 after passing through the base 101; the buffer springs 105 are sleeved around the bolt 103 and entrapped between the base 101 and the carrier plate 102, descending the impact force from the weights by the buffering generated as said weights falling down to impact the carrier plate 102. A count sensor 104 is disposed in one lateral portion of the base 101 for counting the numbers of falling times of the weight module 3.

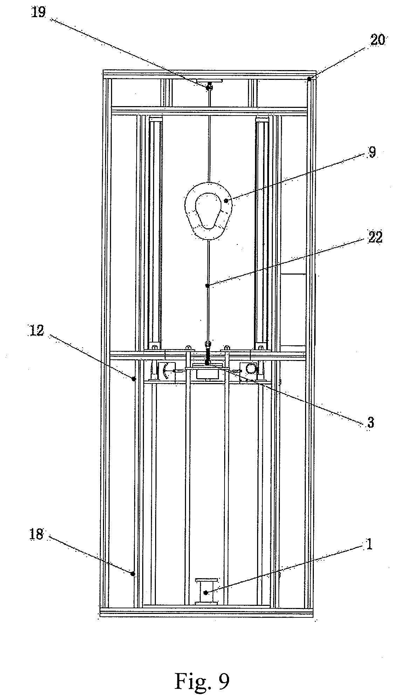

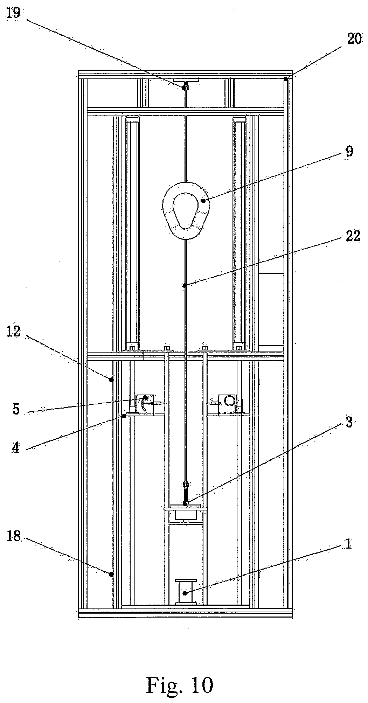

The operating process of the diagnostic device of the preferred embodiment in the present invention features as following that
1) Fastening the differential safety catch 9 with the hanger ring 19 of the central hanger plate 8 on top portion of the diagnostic device;
2) Setting associated detecting parameters in the interface of the cabinet 11;
3) Pulling the hanger hook fastened with one end of the safety rope downwards to the lower portion of the mounting plate 10, and then hanging the weight module 3 to said hook of the safety rope, as shown in Fig. 7;
4) activating the air pump 16 for holding the portable plate 4 up to the upper limit location, and then supporting the weight module 3 by the release claw of the releaser 5, as shown in FIG. 9;
5) The portable plate 4 being actuated for a downward motion by the air lever 21 as long as the weight module 3 rapidly fell down, as shown in Fig. 10. The portable plate 4 alters to be actuated for an upward motion as long as the sensor 13 receives the signature representative of the weight module 3 during said downward motion, then the release claw of the releaser 5 instantaneously holds the weight module 3 up and moves up to the upper limit location along with the motion of the portable plate 4, as shown in Fig. 9;
6) It is indicated that the lock mechanism of the differential safety catch 9 can't be efficiently locked as long as the weight module 3 falling downwards to impact the impact base 1, the count sensor closer to the switch is configured to count the number of impact.

## Claims

1. A diagnostic device for detecting self-lock performance of a differential safety catch, comprising a base plate (2), and a frame (20) within which a releaser (5), a pair of mounting plates (10), one or two upper stop blocks (12), an impact base (1), and a control cabinet (11) being disposed, which is **characterized in that**
a hanger ring (19) is fastened with a central hanger plate (8) on top portion of the frame (20), for connecting with a differential safety catch (9) of which bottom portion being connected to weight module (3);
the pair of the mounting plates (10) are oppositely disposed to separate said frame (20) into upper and lower parts,
on each mounting plate (10) an air cylinder (7), within which an air lever (21) being disposed, is individually formed,
a connected portable plate (4), being provided with a position sensor (13), is fastened with a lower portion of each air lever (21) and driven by the air lever (21) for vertical motion thereof;
beneath each mounting plate (10) two gag lever ports (17) of portable plate (4) and one gag lever port (6) of weight module (3) are individually disposed, wherein each gag lever port of portable plate (4) is connected with the portable plate (4) for preventing the skewing thereof during said vertical motion;
an air pump (16) for holding the portable plate (4) up;
two releasers (5) being oppositely disposed are disposed respectively on the portable plate (4), each of which includes an electromagnet (5010), a release claw (506) and a leverage, and is configured to connect the electromagnet (5010) with one side of the leverage to form a detachable mechanical linkage, and to connect the release claw (506) with another side of the leverage, enabling the release claw (506) vertically vibrating within a certain range while detached from the leverage, and the detachable mechanical linkage formed by the electromagnet (5010) and the leverage holding the weight module (3) to prevent the fall thereof, respectively, wherein the release claw (506) horizontally extends toward the internal central axis of the frame to form a movable planet used for supporting weight module (3);
the impact base (1) is disposed in central portion of the base plate (2), of which centre axis is coincided with the weight module (3), as well as the differential safety catch (9) thereof, a count sensor (104) is further disposed on said impact base (1).

2. The diagnostic device for detecting self-lock performance of a differential safety catch of claim 1, wherein within the frame (20), one or two lower stop blocks (18) are disposed above the base plate (2).

3. The diagnostic device for detecting self-lock performance of a differential safety catch of claim 1, wherein the weight module (3) includes a hanging rod (301), a securing screw nut (302), a weight block (303) and a plurality of weights (304), the weight block (303) and the weights (304) are configured in circular respectively, two thru holes (305) configured to be connectedly inserted with the gag lever port (6) of weight module are formed in the peripheral portion of the weight block (303); a open slot (306) is formed in the weight block (304) for being inserted with the plurality of the weights (304) as needed which being secured by screwing the securing screw nut (302) up.

4. The diagnostic device for detecting self-lock performance of a differential safety catch of claim 1, wherein the releaser (5) further includes a mounting plate (8), a bearing (505), and a sleeve (509), the mounting plate (8) is fastened with the bearing (505), the bearing (505) is fastened with the portable plate (4), the leverage includes a lever (507), latch (504), and a skipjack (503), the lever (507) is connectedly shafted with the mounting plate (8), as well as the bearing (505) through a shaft pin (501) which being fastened with the mounting plate (8), as well as the bearing (505) through a bolt (502); an arc groove (5011) of which circle centre being with the shaft pin (501) is formed in the bearing (501), the latch (504) is configured to connect an end of the lever (507) with its one end and connect an end of the skipjack (503) of which another end being connected with the shaft pin (501), with another end passing through the arc groove (5011); the release claw (506) is secured with the inner port of the lever (507); the sleeve (509) within which the electromagnet (5010) being secured is fastened with mounting plate (8).

5. The diagnostic device for detecting self-lock performance of a differential safety catch of anyone of claim 1 to 4, wherein the impact base (1) includes a base (101), a carrier plate (102), a bolt (103), and buffer springs (105), the carrier plate (102) is embedded into the base (101), the bolt (103) is connected with the carrier plate (102) after passing through the base (101); the buffer springs (105) are sleeved around the bolt (103) and entrapped between the base (101) and the carrier plate (102), the count sensor (104) is disposed in one lateral portion of the base (101).

## Patentansprüche

1. Diagnosevorrichtung zum Detektieren des Selbstsperrverhaltens einer Differential-Sicherungsfalle, umfassend eine Basisplatte (2) und einen Rahmen (20), in welchem ein Auslöser (5), ein Paar von Montageplatten (10), ein oder zwei obere Anschlagblöcke (12), eine Aufprallbasis (1) und ein Schaltschrank (11) angeordnet sind, **dadurch gekennzeichnet, dass**
ein Aufhängering (19) an einer mittigen Aufhängeplatte (8) in einem oberen Abschnitt des Rahmens (20) befestigt ist, und zwar im Hinblick auf dessen Verbindung mit einer Differential-Sicherungsfalle (9), wobei deren unterer Abschnitt mit einem Gewichtsmodul (3) verbunden ist;
das Paar von Montageplatten (10) einander gegenüberliegend angeordnet ist, um den Rahmen (20) in einen oberen und einen unteren Teil zu unterteilen,
an jeder Montageplatte (10) individuell ein Luftzylinder (7) ausgebildet ist, in welchem ein Lufthebel (21) angeordnet ist,
eine damit verbundene, verfahrbare Platte (4), die mit einem Positionssensor (13) versehen ist, an einem unteren Abschnitt eines jeden Lufthebels (21) befestigt ist und von dem Lufthebel (21) im Hinblick auf dessen vertikale Bewegung angetrieben wird;
unterhalb einer jeden Montageplatte (10) zwei Sperrhebelanschlüsse (17) der verfahrbaren Platte (4) und ein Sperrhebelanschluss (6) des Gewichtsmoduls (3) individuell angeordnet sind, wobei ein jeder Sperrhebelanschluss der verfahrbaren Platte (4) mit der verfahrbaren Platte (4) verbunden ist, um einen Schräglauf derselben während der vertikalen Bewegung zu verhindern;
eine Luftpumpe (16), um die verfahrbare Platte (4) auf Höhe zu halten;
zwei einander entgegengesetzt angeordnete Auslöser (5) jeweils auf der verfahrbaren Platte (4) angeordnet sind, und eine jede davon einen Elektromagneten (5010), eine Freigabeklaue (506) und eine Hebelanordnung umfasst und dafür ausgelegt ist, den Elektromagneten (5010) mit einer Seite der Hebelanordnung zu verbinden, um eine lösbare mechanische Verbindung zu bilden, und die Freigabeklaue (506) mit einer anderen Seite der Hebelanordnung zu verbinden, wodurch jeweils ermöglicht wird, dass die Freigabeklaue (506) im von der Hebelanordnung gelösten Zustand innerhalb eines bestimmten Bereichs vertikal vibriert und die durch den Elektromagneten (5010) und die Hebelanordnung gebildete lösbare mechanische Verbindung das Gewichtsmodul (3) festhält, um dessen Fall zu verhindern, wobei sich die Freigabeklaue (506) horizontal zu der inneren Mittelachse des Rahmens hin erstreckt, um einen beweglichen Steg zu bilden, der zum Unterstützen des Gewichtsmoduls (3) verwendet wird;
die Aufprallbasis (1) in dem Mittelabschnitt der Basisplatte (2) angeordnet ist, deren Mittelachse mit dem Gewichtsmodul (3) sowie mit dessen Differential-Sicherungsfalle (9) zur Übereinstimmung gebracht ist, und dass ferner ein Zählsensor (104) an der Aufprallbasis (1) angeordnet ist.

2. Diagnosevorrichtung zum Detektieren des Selbstsperrverhaltens einer Differential-Sicherungsfalle nach Anspruch 1, wobei innerhalb des Rahmens (20) oberhalb der Basisplatte (2) ein oder zwei untere Anschlagblöcke (18) angeordnet sind.

3. Diagnosevorrichtung zum Detektieren des Selbstsperrverhaltens einer Differential-Sicherungsfalle nach Anspruch 1, wobei das Gewichtsmodul (3) einen Aufhängestab (301), eine Sicherungsschraubenmutter (302), einen Gewichtsblock (303) und eine Mehrzahl von Gewichten (304) umfasst, der Gewichtsblock (303) und die Gewichte (304) jeweils kreisförmig ausgebildet sind, zwei Durchgangslöcher (305), die dafür konfiguriert sind, auf den Sperrhebelanschluss (6) des Gewichtsmoduls aufgesetzt und mit diesem verbunden zu werden, in dem Umfangsabschnitt des Gewichtsblocks (303) ausgebildet sind; ein offener Schlitz (306) in dem Gewichtsblock (304) ausgebildet ist, um es zu ermöglichen, je nach Bedarf eine Mehrzahl von Gewichten (304) einzusetzen, die durch Festschrauben der Sicherungsschraubenmutter (302) gesichert werden.

4. Diagnosevorrichtung zum Detektieren des Selbstsperrverhaltens einer Differential-Sicherungsfalle nach Anspruch 1, wobei der Auslöser (5) ferner eine Montageplatte (8), ein Lager (505) und ein Hülse (509) umfasst, die Montageplatte (8) an dem Lager (505) befestigt ist, das Lager (505) an der verfahrbaren Platte (4) befestigt ist, die Hebelanordnung einen Hebel (507), eine Falle (504) und ein Stehaufelement (503) umfasst, der Hebel (507) durch einen Schaftstift (501), welcher durch einen Bolzen (502) an der Montageplatte (8) sowie an dem Lager (505) befestigt ist, mit der Montageplatte (8) sowie mit dem Lager (505) schaftverbunden ist; eine kreisbogenförmige Rille (5011) dessen Kreismittelpunkt in dem Schaftstift (501) liegt, in dem Lager (501) ausgebildet ist, die Falle (504) so ausgelegt ist, dass ein Ende des Hebels (507) mit ihrem einen Ende verbunden ist und ein Ende des Stehaufelements (503), dessen anderes Ende mit dem Schaftstift (501) verbunden ist, mit einem anderen Ende verbunden ist, das durch die kreisbogenförmige Rille (5011) hindurch verläuft; die Freigabeklaue (506) mit dem inneren Anschluss des Hebels (507) gesichert ist; die Hülse (509), in welcher der Elektromagnet (5010) gesichert ist, an der Montageplatte (8) befestigt ist.

5. Diagnosevorrichtung zum Detektieren des Selbstsperrverhaltens einer Differential-Sicherungsfalle nach einem der Ansprüche 1 bis 4, wobei die Aufprallbasis (1) eine Basis (101), eine Trägerplatte (102), einen Bolzen (103) und Pufferfedern (105) umfasst, die Trägerplatte (102) in die Basis (101) eingebettet ist, der Bolzen (103) nach dessen Durchführung durch die Basis (101) mit der Trägerplatte (102) verbunden wird; die Pufferfedern (105) den Bolzen (103) umhüllen und zwischen der Basis (101) und der Trägerplatte (102) eingeschlossen sind, der Zählsensor (104) in einem Seitenabschnitt der Basis (101) angeordnet ist.

## Revendications

1. Dispositif de diagnostic destiné à détecter le comportement autobloquant d'un blocage de sécurité différentiel, lequel comprend une plaque de base (2) et un cadre (20) dans lequel sont disposés un déclencheur (5), une paire de plaques de montage (10), un ou deux blocs de butée supérieurs (12), une base d'impact (1) et une armoire de commande (11), **caractérisé en ce que**
un anneau de suspension (19) est fixé à une plaque de suspension centrale (8) située dans une partie supérieure du cadre (20) en vue d'être relié à un blocage de sécurité différentiel (9), la partie inférieure de ce dernier étant reliée à un module de poids (3) ;
les deux plaques de montage (10) sont disposées à l'opposé l'une de l'autre afin de diviser le cadre (20) en une partie supérieure et une partie inférieure,
sur chaque plaque de montage (10) est réalisé de manière individuelle un cylindre à air (7) dans lequel est disposé un levier à air (21),
une plaque déplaçable (4) reliée à ces derniers et pourvue d'un capteur de position (13) est fixée à une partie inférieure de chaque levier à air (21) et est actionnée par le levier à air (21) afin d'être déplacée de manière verticale ;
deux raccords de levier de blocage (17) de la plaque déplaçable (4) et un raccord de levier de blocage (6) du module de poids (3) sont disposés de manière individuelle au-dessous de chaque plaque de montage (10), chaque raccord de levier de blocage de la plaque déplaçable (4) étant relié à la plaque déplaçable (4) afin d'empêcher une course oblique de celle-ci lors du déplacement vertical ;
une pompe à air (16) [est prévue] afin de maintenir la plaque déplaçable (4) à la hauteur voulue ;
deux déclencheurs (5) disposés à l'opposé d'un de l'autre sont disposés respectivement sur la plaque déplaçable (4) et **en ce que** chacun d'eux comprend un électroaimant (5010), une griffe de libération (506) et un système à levier et est conçu pour relier l'électroaimant (5010) à un coté du système à levier afin de former une liaison mécanique séparable et pour relier la griffe de libération (506) à un autre côté du système à levier, ce qui fait que la griffe de libération (506), lorsque celle-ci est séparée du système à levier, vibre verticalement à l'intérieur d'une plage déterminée et que la liaison mécanique séparable formée par l'électroaimant (5010) et le système à levier maintient le module de poids (3) en place afin d'empêcher sa chute, la griffe de libération (506) s'étendant horizontalement vers l'axe médian intérieur du cadre afin de former une partie mobile qui est utilisée pour soutenir le module de poids (3) ;
la base d'impact (1) est disposée dans la partie centrale de la plaque de base (2) de telle sorte que l'axe central de cette dernière coïncide avec le module de poids (3) ainsi qu'avec son blocage de sécurité différentiel (9), et **en ce qu'**un capteur de comptage (104) est en outre disposé au niveau de la base d'impact (1).

2. Dispositif de diagnostic destiné à détecter le comportement autobloquant d'un blocage de sécurité différentiel selon la revendication 1, dans lequel un ou deux blocs de butée inférieurs (18) sont disposés à l'intérieur du cadre (20) au-dessus de la plaque de base (2).

3. Dispositif de diagnostic destiné à détecter le comportement autobloquant d'un blocage de sécurité différentiel selon la revendication 1, dans lequel le module de poids (3) comprend une tige de suspension (301), un écrou de sûreté (302), un bloc de poids (303) et une pluralité de poids (304), dans lequel le bloc de poids (303) et les poids (304) sont réalisés respectivement en forme de cercle, deux trous traversants (305) configurés pour être placés sur le raccord de levier de blocage (6) du module de poids et pour être reliés à celui-ci sont réalisés dans la partie circonférentielle du bloc de poids (303) ; une fente ouverte (306) est réalisée dans le bloc de poids (304) afin de permettre d'insérer au choix une pluralité de poids (304) lesquels sont arrêtés par serrage de l'écrou de sûreté (302).

4. Dispositif de diagnostic destiné à détecter le comportement autobloquant d'un blocage de sécurité différentiel selon la revendication 1, dans lequel le déclencheur (5) comprend en outre une plaque de montage (8), un palier (505) et un manchon (509), la plaque de montage (8) est fixée sur le palier (505), le palier (505) est fixé sur la plaque déplaçable (4), le système à levier comprend un blocage (504) et un élément de redressement (503), le levier (507) est relié par tige à la plaque de montage (8) ainsi qu'au palier (505), et ce grâce à une tige (501) qui est fixée sur la plaque de montage (8) ainsi que sur le palier (505) par un boulon (502) ; une rainure (5011) en arc de cercle dont le centre de cercle est situé dans la tige (501) est réalisée dans le palier (501), le blocage (504) est conçu de telle sorte qu'une extrémité du levier (507) est reliée à l'une de ses extrémités et qu'une extrémité de l'élément de redressement (503), dont l'autre extrémité est relié à la tige (501), est reliée à une autre extrémité qui traverse la rainure (5011) en arc de cercle ; la griffe de libération (506) est arrêtée grâce au raccord intérieur du levier (507) ; le manchon (509) dans lequel l'électroaimant (5010) est arrêté, est fixé à la plaque de montage (8).

5. Dispositif de diagnostic destiné à détecter le comportement autobloquant d'un blocage de sécurité différentiel selon l'une quelconque des revendications 1 à 4, dans lequel la base d'impact (1) comprend une base (101), une plaque de support (102), un boulon (103) et des ressorts tampons (105), la plaque de support (102) est intégrée dans la base (101), le boulon (103) se trouve relié à la plaque de support (102) après avoir traversé la base (101) ; les ressorts tampons (105) entourent le boulon (103) et sont enfermés entre la base (101) et la plaque de support (102), le capteur de comptage (104) est disposé dans une partie latérale de la base (101).
